# EUROPEAN PATENT APPLICATION

(11) **EP 4 749 107 A1**
(43) Date of publication of application: **27.05.2026**
(21) Application number: 25218839.6
(22) Date of filing: 26.11.2025
(51) Int. Cl.: F02C 7/268, F02C 7/32, B64D 27/33

(54) **AIRCRAFT POWERPLANT WITH ELECTRIC MACHINE SYSTEM**

(30) Priority: 26.11.2024 US 202418960438
(71) Applicant: RTX Corporation, Farmington, CT 06032 (US)
(72) Inventor: CLARK, Thomas E., Wells, 04090 (US); YAZICI, Murat, Glastonbury, 06033 (US)
(74) Representative: Dehns

(57) **Abstract**

An aircraft powerplant (20) assembly includes a gearbox (102), a first electric machine (90A), a first electric cable (112A), a second electric machine (90B) and a second electric cable (112B). The first electric machine (90A) is mounted to the gearbox (102) at a first side (135A) of the gearbox (102). A first machine terminal (132A) is disposed at a first side (130A) of the first electric machine (90A). The first electric cable (112A) is electrically coupled to the first machine stator (96A) through the first machine terminal (132A). The second electric machine (90B) is mounted to the gearbox (102) at the first side (135) of the gearbox (102). A second machine terminal (132B) is disposed at a second side (130B) of the second electric machine (90B) that faces the first side (130A) of the first electric machine (90A). The second electric cable (112B) is electrically coupled to the second machine stator (96B) through the second machine terminal (132B).

## Description

### BACKGROUND OF THE DISCLOSURE

### 1. Technical Field

This disclosure relates generally to an aircraft powerplant and, more particularly, to an electric machine system for the aircraft powerplant.

### 2. Background Information

An aircraft powerplant such as an aircraft propulsion system may include one or more electric machines. Various electric machine systems are known in the art. While these known electric machine systems have various benefits, there is still room in the art for improvement.

### SUMMARY OF THE DISCLOSURE

According to one aspect of the present invention, an assembly is provided for an aircraft powerplant. This assembly includes a gearbox, a first electric machine, a first electric cable, a second electric machine and a second electric cable. The first electric machine is mounted to the gearbox at a first side of the gearbox. The first electric machine includes a first machine rotor, a first machine stator and a first machine terminal. The first machine rotor is rotatable about a first machine axis. The first machine stator is next to the first machine rotor. The first machine terminal is disposed at a first side of the first electric machine. The first electric cable is electrically coupled to the first machine stator through the first machine terminal. The second electric machine is mounted to the gearbox at the first side of the gearbox. The second electric machine includes a second machine rotor, a second machine stator and a second machine terminal. The second machine rotor is rotatable about a second machine axis. The second machine stator is next to the second machine rotor. The second machine terminal is disposed at a second side of the second electric machine that faces the first side of the first electric machine. The second electric cable is electrically coupled to the second machine stator through the second machine terminal.

According to another aspect of the present invention, another assembly is provided for an aircraft powerplant. This assembly includes a gearbox, a first electric machine, a first electric cable, a second electric machine and a second electric cable. The first electric machine is mounted to the gearbox at a first side of the gearbox. The first electric machine includes a first machine rotor, a first machine stator and a first machine terminal. The first machine rotor is rotatable about a first machine axis. The first machine stator is configurable in electromagnetic communication with the first machine rotor. The first electric cable is electrically coupled to the first electric machine at the first machine terminal. The second electric machine is mounted to the gearbox at the first side of the gearbox. The second electric machine includes a second machine rotor, a second machine stator and a second machine terminal. The second machine rotor is rotatable about a second machine axis. The second machine stator is configurable in electromagnetic communication with the second machine rotor. The second electric cable is electrically coupled to the second electric machine at the second machine terminal. A gap is formed by and extends laterally between the first electric machine and the second electric machine. The first machine terminal and the second machine terminal are disposed in the gap.

According to still another aspect of the present invention, another assembly is provided for an aircraft powerplant. This assembly includes a compressor section, a combustor section, a first turbine section, a second turbine section, a flowpath, a first engine rotating structure, a first electric machine, a first electric cable, a second engine rotating structure, a second electric machine and a second electric cable. The flowpath extends through the compressor section, the combustor section, the first turbine section and the second turbine section from an inlet into the flowpath to an exhaust from the flowpath. The first engine rotating structure includes a first turbine rotor disposed in the first turbine section. The first engine rotating structure is rotatable about an axis. The first electric machine includes a first machine rotor, a first machine stator and a first machine terminal. The first machine rotor is operationally coupled to the first engine rotating structure. The first machine stator is next to the first machine rotor. The first electric cable is electrically coupled to the first electric machine at the first machine terminal. The second engine rotating structure includes a second turbine rotor disposed in the second turbine section. The second electric machine includes a second machine rotor, a second machine stator and a second machine terminal. The second machine rotor is operationally coupled to the second engine rotating structure. The second machine stator is next to the second machine rotor. The second electric cable is electrically coupled to the second electric machine at the second machine terminal. A gap is formed by and extends circumferentially between the first electric machine and the second electric machine. The first machine terminal and the second machine terminal are disposed in the gap. A circumferential width of the gap is equal to or less than at least one of an axial length of the first electric machine along the axis or an axial length of the second electric machine along the axis.

Optionally, and in accordance with any of the above, the second machine axis may be parallel with the first machine axis.

Optionally, and in accordance with any of the above, the second machine terminal may be axially aligned with the first machine terminal along at least one of the first machine axis or the second machine axis.

Optionally, and in accordance with any of the above, the second machine terminal may be axially offset from the first machine terminal along at least one of the first machine axis or the second machine axis.

Optionally, and in accordance with any of the above, the assembly may also include a conduit. The first electric cable may extend longitudinally through the conduit with a portion of the first electric cable projecting longitudinally out from an end of the conduit to the first machine terminal. The second electric cable may extend longitudinally through the conduit with a portion of the second electric cable projecting longitudinally out from the end of the conduit to the second machine terminal.

Optionally, and in accordance with any of the above, a gap may extend laterally between and may be formed by the first side of the first electric machine and the second side of the second electric machine. The first electric cable may project longitudinally into the gap to the first machine terminal. The second electric cable may project longitudinally into the gap to the second machine terminal.

Optionally, and in accordance with any of the above, a lateral width of the gap may be equal to or less than at least one of a lateral width of the first electric machine or a lateral width of the second electric machine.

Optionally, and in accordance with any of the above, a lateral width of the gap may be equal to or less than at least one of an axial length of the first electric machine or an axial length of the second electric machine.

Optionally, and in accordance with any of the above, the first electric machine may project axially away from the first side of the gearbox to an axial distal end of the first electric machine, and the first machine terminal is positioned axially closer to the axial distal end of the first electric machine along the first machine axis than the gearbox. In addition or alternatively, the second electric machine may project axially away from the first side of the gearbox to an axial distal end of the second electric machine, and the second machine terminal is positioned axially closer to the axial distal end of the second electric machine along the second machine axis than the gearbox.

Optionally, and in accordance with any of the above, the first electric machine may project axially away from the first side of the gearbox to an axial distal end of the first electric machine. The first machine terminal may be positioned axially closer to the gearbox along the first machine axis than the axial distal end of the first electric machine. In addition or alternatively, the second electric machine may project axially away from the first side of the gearbox to an axial distal end of the second electric machine. The second machine terminal may be positioned axially closer to the gearbox along the second machine axis than the axial distal end of the second electric machine.

Optionally, and in accordance with any of the above, the first electric machine may project axially away from the first side of the gearbox to an axial distal end of the first electric machine. The axial distal end of the first electric machine may be disposed a first axial distance from the gearbox. The first machine terminal may be disposed a second axial distance from the gearbox that is equal to or greater than ten percent of the first axial distance. In addition or alternatively, the second electric machine may project axially away from the first side of the gearbox to an axial distal end of the second electric machine. The axial distal end of the second electric machine may be disposed a third axial distance from the gearbox. The second machine terminal may be disposed a fourth axial distance from the gearbox that is equal to or greater than ten percent of the third axial distance.

Optionally, and in accordance with any of the above, the first machine terminal may be one of a plurality of first machine terminals disposed at and arranged axially along the first side of the first electric machine. The first electric cable may be one of a plurality of first electric cables. Each of the first electric cables may be electrically coupled to the first machine stator through a respective one of the first machine terminals. In addition or alternatively, the second machine terminal may be one of a plurality of second machine terminals disposed at and arranged axially along the second side of the second electric machine. The second electric cable may be one of a plurality of second electric cables. Each of the second electric cables may be electrically coupled to the second machine stator through a respective one of the second machine terminals.

Optionally, and in accordance with any of the above, the assembly may also include an engine case extending axially along and circumferentially about a centerline axis. The gearbox may be disposed radially outboard of and mounted with the engine case. The gearbox may extend axially along the centerline axis to the first side of the gearbox.

Optionally, and in accordance with any of the above, the first machine axis and the second machine axis may be parallel to the centerline axis.

Optionally, and in accordance with any of the above, the assembly may also include a compressor section, a combustor section, a turbine section, a flowpath and a first engine rotating structure. The flowpath may extend through the compressor section, the combustor section and the turbine section from an inlet into the flowpath to an exhaust from the flowpath. The first engine rotating structure may include a first turbine rotor disposed in the turbine section. The first engine rotating structure may be operatively coupled to the first machine rotor through the gearbox.

Optionally, and in accordance with any of the above, the assembly may also include a second engine rotating structure comprising a second turbine rotor disposed in the turbine section. The second engine rotating structure may be operatively coupled to the second machine rotor through the gearbox. The second engine rotating structure may be rotationally independent of the first engine rotating structure.

Optionally, and in accordance with any of the above, the assembly may also include a first electric machine controller and a second electric machine controller. The first electric machine controller may be electrically coupled to the first electric machine through the first electric cable. The second electric machine controller may be electrically coupled to the second electric machine through the second electric cable.

Optionally, and in accordance with any of the above, the assembly may also include a fan case and a core case radially inboard of the fan case. The gearbox may be mounted with the core case. The first electric machine controller and the second electric machine controller may each be mounted with the fan case.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial schematic illustration of an aircraft propulsion system.
FIG. 2 is a schematic illustration of a portion of the aircraft propulsion system with an electric machine system coupled to an aircraft electrical system.
FIG. 3 is a plan view illustration of a portion of the aircraft propulsion system at an interface between electric machines and a gearbox.
FIG. 4 is a partial cross-sectional illustration of the aircraft propulsion system.
FIG. 5 is a plan view illustration of a portion of the aircraft propulsion system at the interface between an exemplary one of the electric machines and the gearbox.

### DETAILED DESCRIPTION

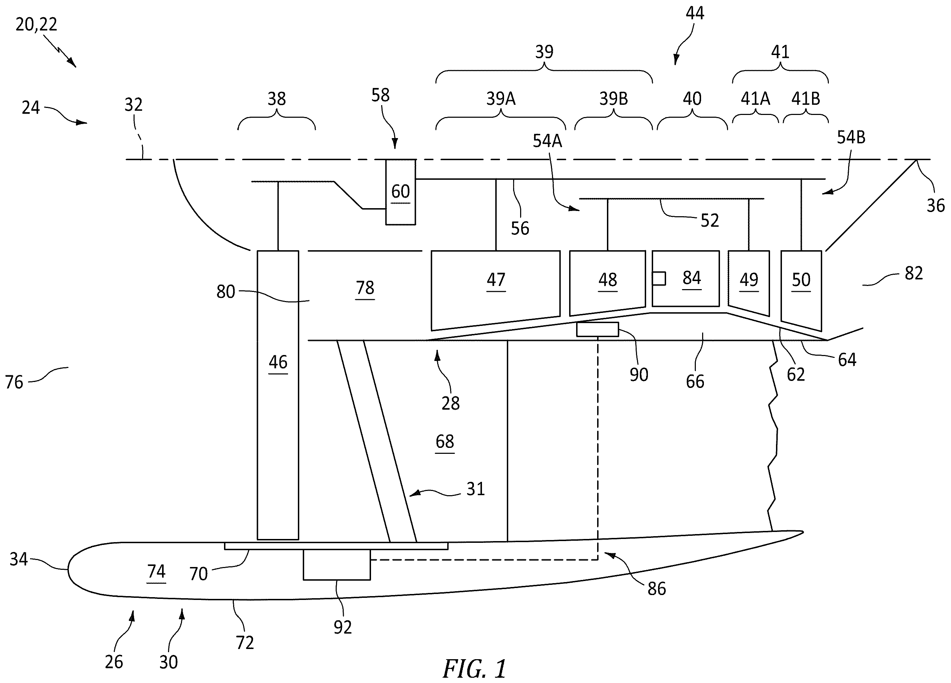

FIG. 1 illustrates a powerplant 20 for an aircraft. The aircraft may be an airplane, a drone (e.g., an unmanned aerial vehicle (UAV)) or any other manned or unmanned aerial vehicle or system. For ease of description, the aircraft powerplant 20 is described below as a propulsion system 22 for the aircraft and, more particularly, as a turbofan propulsion system. The aircraft powerplant 20 of the present disclosure, however, is not limited to such an exemplary aircraft propulsion system. Moreover, the aircraft powerplant 20 is not limited to propulsion system applications. The aircraft powerplant 20, for example, may also be configured as an electrical power system for the aircraft.

The aircraft propulsion system 22 includes a gas turbine engine 24 (e.g., a turbofan engine) housed within a stationary engine housing 26, which engine housing 26 of FIG. 1 includes an inner housing structure 28, an outer housing structure 30 and a vane structure 31 (e.g., a fan exit guide vane (FEGV) structure) extending radially between and connected to the inner housing structure 28 and the outer housing structure 30. The aircraft propulsion system 22 extends axially along an axis 32 between an axial forward, upstream end 34 of the aircraft propulsion system 22 and an axial aft, downstream end 36 of the aircraft propulsion system 22. Briefly, the powerplant axis 32 may be a centerline axis of the aircraft propulsion system 22, the turbine engine 24 and/or one or more of its members. The powerplant axis 32 may also or alternatively be a rotational axis for one or more members of the turbine engine 24.

The turbine engine 24 of FIG. 1 includes a propulsor section 38 (e.g., a fan section), a compressor section 39, a combustor section 40 and a turbine section 41. The compressor section 39 of FIG. 1 includes a low pressure compressor (LPC) section 39A and a high pressure compressor (HPC) section 39B. The turbine section 41 of FIG. 1 includes a high pressure turbine (HPT) section 41A and a low pressure turbine (LPT) section 41B. Here, at least (or only) the LPC section 39A, the HPC section 39B, the combustor section 40, the HPT section 41A and the LPT section 41B collectively form a core 44 of the turbine engine 24.

The engine sections 38-41B may be arranged sequentially along the powerplant axis 32 within the engine housing 26. The propulsor section 38 includes a bladed propulsor rotor 46; e.g., a fan rotor. The LPC section 39A includes a bladed low pressure compressor (LPC) rotor 47. The HPC section 39B includes a bladed high pressure compressor (HPC) rotor 48. The HPT section 41A includes a bladed high pressure turbine (HPT) rotor 49. The LPT section 41B includes a bladed low pressure turbine (LPT) rotor 50. The propulsor rotor 46, the LPC rotor 47, the HPC rotor 48, the HPT rotor 49 and the LPT rotor 50 each include a rotor base (e.g., a disk or a hub) and a plurality of rotor blades (e.g., airfoils, rotor vanes, etc.). The rotor blades are arranged and may be equispaced circumferentially around the respective rotor base in one or more arrays. With this arrangement, the rotor blades may be arranged into one or more stages. Each of the rotor blades is connected to (e.g., formed integral with or otherwise attached to) the respective rotor base. Each of the rotor blades projects radially (e.g., spanwise) out from the respective rotor base to a distal tip of the respective rotor blade.

The HPC rotor 48 is coupled to and rotatable with the HPT rotor 49. The HPC rotor 48 of FIG. 1, for example, is connected to the HPT rotor 49 through a high speed shaft 52. At least (or only) the HPC rotor 48, the HPT rotor 49 and the high speed shaft 52 collectively form a high speed rotating structure 54A; e.g., a high speed spool of the engine core 44. This high speed rotating structure 54A of FIG. 1 and its members 48, 49 and 52 are rotatable about the powerplant axis 32. However, it is contemplated the high speed rotating structure 54A may alternatively be rotatable about another axis radially and/or angularly offset from the rotational axis of the propulsor rotor 46 and/or the centerline axis of the turbine engine 24.

The LPC rotor 47 is coupled to and rotatable with the LPT rotor 50. The LPC rotor 47 of FIG. 1, for example, is connected to the LPT rotor 50 through a low speed shaft 56. At least (or only) the LPC rotor 47, the LPT rotor 50 and the low speed shaft 56 collectively form a low speed rotating structure 54B; e.g., a low speed spool of the engine core 44. This low speed rotating structure 54B is further coupled to the propulsor rotor 46 through a drivetrain 58. The drivetrain 58 may be configured as a geared drivetrain, where a geartrain 60 (e.g., a transmission, a speed change device, an epicyclic geartrain, etc.) is disposed between and operatively couples the propulsor rotor 46 to the low speed rotating structure 54B and its LPT rotor 50. With this arrangement, the propulsor rotor 46 may rotate at a different (e.g., slower) rotational speed than the low speed rotating structure 54B and its LPT rotor 50. Alternatively, the drivetrain 58 may be configured as a direct-drive drivetrain, where the geartrain 60 is omitted. With such an arrangement, the propulsor rotor 46 rotates at a common (the same) rotational speed as the low speed rotating structure 54B and its LPT rotor 50. The low speed rotating structure 54B of FIG. 1 and its members 47, 50 and 56 as well as the propulsor rotor 46 are rotatable about the powerplant axis 32. However, it is contemplated the low speed rotating structure 54B may alternatively be rotatable about another axis radially and/or angularly offset from the rotational axis of the propulsor rotor 46 and/or the centerline axis of the turbine engine 24.

The inner housing structure 28 of FIG. 1 includes an inner case 62 (e.g., a core case) for the turbine engine 24, an inner nacelle structure 64 (sometimes referred to as an inner fixed structure (IFS)) and an internal inner housing compartment 66. The inner case 62 is disposed radially outboard of, extends axially along and may circumscribe one or more or all of the engine sections 39A-41B and their respective engine rotors 47-50. The inner case 62 may thereby house and provide a support structure for the respective engine sections 39A-41B and their respective engine rotors 47-50. The inner nacelle structure 64 is configured to provide an aerodynamic cover over the engine core 44 and its inner case 62. The inner housing compartment 66 of FIG. 1 is formed by and is disposed radially between the inner case 62 and an inner barrel of the inner nacelle structure 64. The inner housing structure 28 and its inner nacelle structure 64 may also form a radial inner peripheral boundary of a bypass flowpath 68 (e.g., an annular bypass flowpath) within the aircraft propulsion system 22.

The outer housing structure 30 of FIG. 1 includes an outer case 70 (e.g., a fan case) for the turbine engine 24, an outer nacelle structure 72 and an internal outer housing compartment 74. The outer case 70 is disposed radially outboard of, extends axially along and may circumscribe the propulsor section 38 and its propulsor rotor 46. The outer case 70 may thereby house and provide a containment structure for the propulsor section 38 and its propulsor rotor 46. The outer nacelle structure 72 is configured to provide an aerodynamic cover over the outer case 70. The outer housing compartment 74 of FIG. 1 is at least partially formed by and disposed radially between the outer case 70 and an outer portion (e.g., fan cowls) of the outer nacelle structure 72. The outer housing structure 30 and its outer nacelle structure 72 may also form a radial outer peripheral boundary of the bypass flowpath 68. With this arrangement, the outer housing structure 30 is spaced radially outboard from the inner housing structure 28. The outer housing structure 30 and its members 70 and/or 72 also extend axially along (e.g., axially overlap) and extend circumferentially about (e.g., circumscribe) the inner housing structure 28 and the engine core 44.

During operation, ambient air from outside of the aircraft may enter the aircraft propulsion system 22 of FIG. 1 and its turbine engine 24 through an airflow inlet 76. This air is directed across the propulsor section 38 and into a core flowpath 78 (e.g., an annular core flowpath) and the bypass flowpath 68. The core flowpath 78 of FIG. 1 extends sequentially through the LPC section 39A, the HPC section 39B, the combustor section 40, the HPT section 41A and the LPT section 41B from an airflow inlet 80 into the core flowpath 78 to a combustion products exhaust 82 out from the core flowpath 78 and the engine core 44. The air entering the core flowpath 78 may be referred to as "core air". The bypass flowpath 68 extends through a bypass duct, which bypass flowpath 68 and bypass duct bypass (e.g., are disposed radially outboard of and extend along) the engine core 44 and the inner housing structure 28. The air within the bypass flowpath 68 may be referred to as "bypass air".

The core air is compressed by the LPC rotor 47 and the HPC rotor 48 and is directed into a combustion chamber 84 (e.g., an annular combustion chamber) of a combustor (e.g., an annular combustor) in the combustor section 40. Fuel is injected into the combustion chamber 84 by one or more fuel injectors and mixed with the compressed core air to provide a fuel-air mixture. This fuel-air mixture is ignited and combustion products thereof flow through and sequentially drive rotation of the HPT rotor 49 and the LPT rotor 50 about the powerplant axis 32. The rotation of the HPT rotor 49 and the LPT rotor 50 respectively drive rotation of the HPC rotor 48 and the LPC rotor 47 about the powerplant axis 32 and, thus, compression of the air received from the core inlet 80. The rotation of the LPT rotor 50 also drives rotation of the propulsor rotor 46. The rotation of the propulsor rotor 46 propels the bypass air through and out of the bypass flowpath 68. The propulsion of the bypass air may account for a majority of thrust generated by the turbine engine 24 of FIG. 1. Briefly, within the bypass flowpath 68, the vane structure 31 conditions (e.g., straightens out, de-swirls, etc.) the flow of bypass air propelled by the propulsor rotor 46 to enhance the forward thrust.

While the turbine engine 24 is described above with a particular two rotating structure arrangement, the present disclosure is not limited thereto. For example, the LPC rotor 47 may be omitted to configure the LPT rotor 50 as a power turbine (PT) rotor for the propulsor rotor 46. **In** another example, the turbine engine 24 may also include another rotating structure; e.g., an intermediate speed spool for the engine core 44.

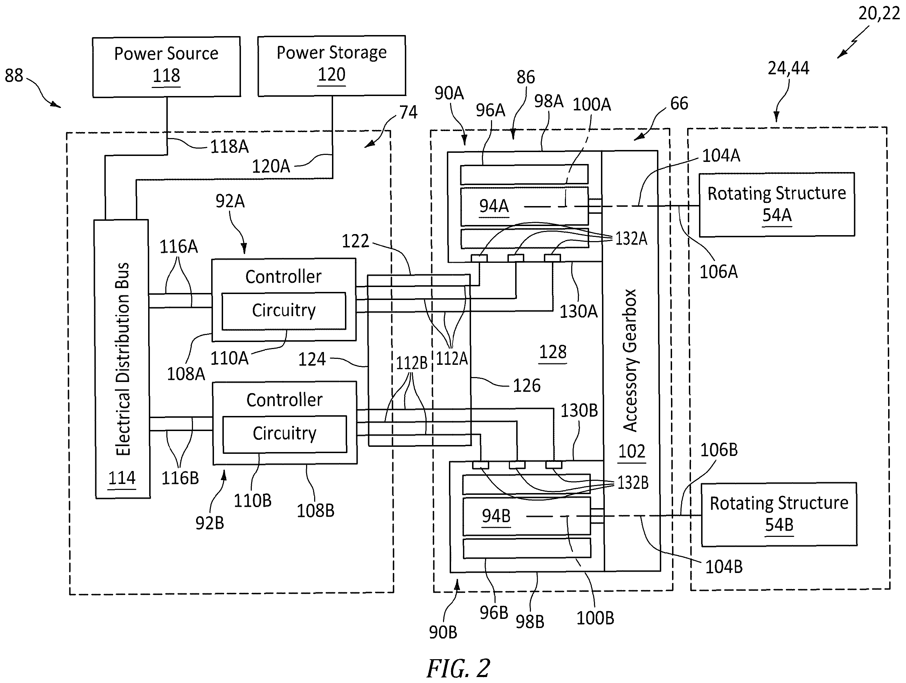

Referring to FIG. 2, the aircraft propulsion system 22 also includes an electric machine system 86 (see also FIG. 1) electrically coupled to an electrical system 88 for the aircraft and its aircraft propulsion system 22. The electric machine system 86 of FIG. 2 includes one or more electric machines 90A and 90B (generally referred to as "90") and one or more electric machine (EM) controllers 92A and 92B (generally referred to as "92"). For ease of description, each electric machine 90 of FIG. 2 is described below as being electrically coupled to, controlled by and/or otherwise associated with a single, dedicated one of the EM controllers 92. However, it is contemplated a single EM controller may alternatively be electrically coupled to, may control and/or may otherwise be associated with multiple electric machines. It is also contemplated multiple EM controllers may be electrically coupled to, may control and/or may otherwise be associated with one or more common electric machines.

Each electric machine 90A, 90B of FIG. 2 includes an electric machine rotor 94A, 94B (generally referred to as "94"), an electric machine stator 96A, 96B (generally referred to as "96") and an electric machine housing 98A, 98B (generally referred to as "98"); e.g., a case. The machine rotor 94A, 94B is rotatable about a rotational axis 100A, 100B (generally referred to as "100") of the machine rotor 94A, 94B, which machine axis 100 may also be an axial centerline of the electric machine 90. The machine stator 96 is disposed next to and in electromagnetic communication with the machine rotor 94. The machine stator 96 of FIG. 2, in particular, is radially outboard of and circumscribes the machine rotor 94. With this arrangement, each electric machine 90 is configured as a radial flux electric machine. The electric machines 90 of the present disclosure, however, are not limited to such an exemplary rotor-stator configuration nor to radial flux arrangements. The machine rotor 94, for example, may alternatively be radially outboard of and circumscribe the machine stator 96. In another example, the machine rotor 94 may be axially next to the machine stator 96 configuring the respective electric machine 90 as an axial flux electric machine. Referring again to FIG. 2, the machine rotor 94 and the machine stator 96 are at least partially or completely housed within and interior of the machine housing 98.

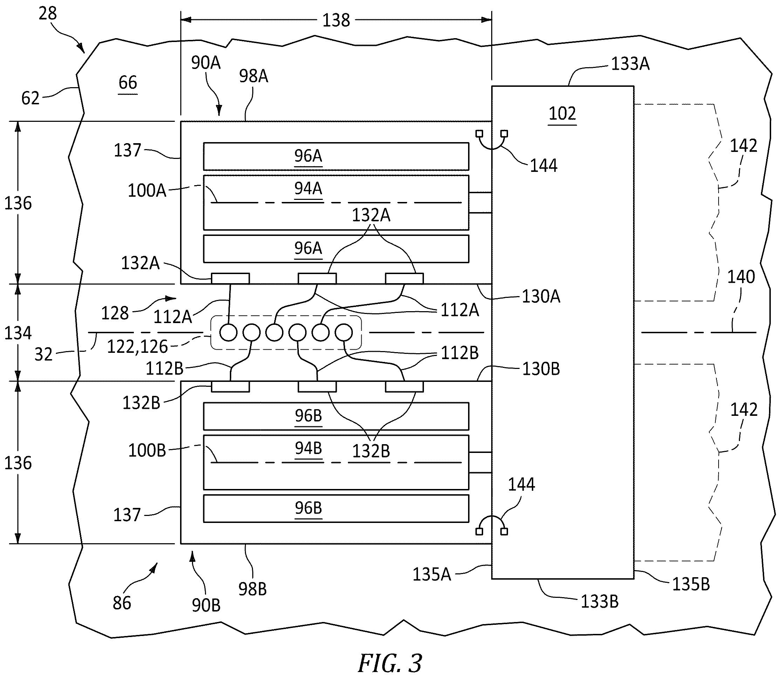

The electric machines 90 may be mounted to a common stationary component of the aircraft propulsion system 22. Each electric machine 90 of FIG. 2, for example, is mounted to a gearbox 102 (e.g., an accessory gearbox) for the turbine engine 24. This gearbox 102 may be disposed within the inner housing compartment 66. The gearbox 102 of FIG. 3, for example, is located radially outboard of and next to the inner case 62, and the gearbox 102 is also mounted to the inner case 62. Each electric machine 90 may thereby be disposed within the inner housing compartment 66 and mounted with the inner housing structure 28 and its inner case 62. Each electric machine 90, for example, may be indirectly mounted to the inner case 62 through the gearbox 102. However, it is also contemplated one or more mounts may directly mount a respective electric machine 90 to the inner case 62.

Referring to FIG. 2, each electric machine 90A, 90B is operatively coupled to a respective one of the engine rotating structures 54A and 54B (generally referred to as "54") through the gearbox 102. Each machine rotor 94 of FIG. 2, for example, is mechanically coupled to a respective gear system 104A, 104B (generally referred to as "104") of the gearbox 102, and the gearbox gear system 104 is mechanically coupled to the respective engine rotating structure 54A, 54B through a respective drivetrain 106A, 106B (generally referred to as "106"); schematically shown. This drivetrain 106 may be configured as or otherwise include a shaft, a tower shaft assembly, another gearbox (e.g., an angle gearbox), and/or the like. For ease of description, each machine rotor 94 of FIG. 2 is described below as being coupled to and rotatable with a unique one of the engine rotating structures 54 of the aircraft propulsion system 22. However, it is contemplated multiple machine rotors may alternatively be coupled to and rotatable with a common engine rotating structure. It is also contemplated a single one of the machine rotors may be coupled to and rotatable with multiple engine rotating structures, directly or through another device such as a differential or a clutch system.

Each electric machine 90 of FIG. 2 may be configurable as an electric motor and/or an electric generator; e.g., an electric motor-generator. For example, during a motor mode of operation, a respective electric machine 90 may operate as the electric motor to convert electricity received from the aircraft electrical system 88. The machine stator 96, for example, may generate an electromagnetic field with the machine rotor 94 using a current of electricity received from the aircraft electrical system 88 through the respective EM controller 92. This electromagnetic field may drive rotation of the machine rotor 94. The machine rotor 94, in turn, may provide mechanical power to and drive rotation of the respective engine rotating structure 54 through the respective drivetrain 106. This mechanical power may be provided to boost power or completely power the rotation of the respective engine rotating structure 54. By contrast, during a generator mode of operation, the electric machine 90 may operate as the electric generator to convert mechanical power received from the respective engine rotating structure 54 into electricity. Rotation of the machine rotor 94, for example, may be rotationally driven by rotation of the respective engine rotating structure 54 through the respective drivetrain 106. The rotation of the machine rotor 94 may generate an electromagnetic field with the machine stator 96, and the machine stator 96 may convert energy from the electromagnetic field into electricity. The respective electric machine 90 may then provide a current of electricity to the aircraft electrical system 88 through the respective EM controller 92 for storage and/or further use. The electric machines 90 of the present disclosure, however, are not limited to such exemplary operation. For example, one, some or all of the electric machines 90 may alternatively each be configured as a dedicated electric generator; e.g., without the electric motor functionality. One, some or all of the electric machines 90 may alternatively each be configured as a dedicated electric motor; e.g., without the electric generator functionality.

Each EM controller 92 includes a controller housing 108A, 108B (generally referred to as "108") and internal controller circuitry 110A, 110B (generally referred to as "110"). The controller housing 108 may be configured as an enclosed case (e.g., a closed or sealed container) for the respective controller circuitry 110. The controller circuitry 110 is disposed within an interior of the controller housing 108; e.g., an internal chamber or other volume(s) within and enclosed by the controller housing 108. The controller circuitry 110 includes various electrical components, connectors and the like. Examples of the electrical components include, but are not limited to, printed circuit board(s) (PCB(s)), electrical inductor(s), electrical inverter(s), electrical amplifier(s), electrical switch(es) (e.g., contactor(s), relay(s), etc.), processing device(s), memory module(s), communication module(s), electrical transformer(s), electrical rectifier(s), transformer(s), and/or the like.

Each EM controller 92 is electrically coupled to a respective one of the electric machines 90 through one or more electric cables 112A, 112B (generally referred to as "112"); e.g., high voltage electric cables, power feeder cables, etc. More particularly, the controller circuitry 110 of each EM controller 92 is electrically coupled to the respective electric machine 90 and its machine stator 96 through the respective electric cables 112. Similarly, each EM controller 92 is electrically coupled to an electrical distribution bus 114 of the aircraft electrical system 88 through one or more electric cables 116A, 116B (generally referred to as "116"); e.g., high voltage electric cables, power feeder cables, etc. More particularly, the controller circuitry 110 of each EM controller 92 is electrically coupled to the aircraft electrical system 88 and its electrical distribution bus 114 through the respective electric cables 116.

Each EM controller 92 and its controller circuitry 110 are configured to control operation of a respective one of the electric machines 90. For example, when operating as the electric motor, the respective EM controller 92 and its controller circuitry 110 are configured to regulate a flow of electricity from the aircraft electrical system 88 to the respective electric machine 90. This electricity flow regulation may include: (a) turning-on the flow of electricity from the aircraft electrical system 88 to the respective electric machine 90 (e.g., electrically coupling the respective electric machine 90 to the aircraft electrical system 88); (b) turning-off the flow of electricity from the aircraft electrical system 88 to the respective electric machine 90 (e.g., electrically decoupling the respective electric machine 90 from the aircraft electrical system 88); (c) moderating the flow of electricity from the aircraft electrical system 88 to the respective electric machine 90. Here, the respective EM controller 92 operates as a motor controller. In another example, when operating as the electric generator, the respective EM controller 92 and its controller circuitry 110 are configured to regulate a flow of electricity from the respective electric machine 90 to the aircraft electrical system 88. This electricity flow regulation may include: (a) turning-on the flow of electricity from the respective electric machine 90 to the aircraft electrical system 88 (e.g., electrically coupling the respective electric machine 90 to the aircraft electrical system 88); (b) turning-off the flow of electricity from the respective electric machine 90 to the aircraft electrical system 88 (e.g., electrically decoupling the respective electric machine 90 from the aircraft electrical system 88); (c) moderating the flow of electricity from the respective electric machine 90 to the aircraft electrical system 88. Here, the respective EM controller 92 operates as a generator controller.

The EM controllers 92 may be disposed within the outer housing compartment 74. Each EM controller 92 of FIG. 1, for example, is located radially outboard of and next to the outer case 70, and each EM controller 92 and its controller housing 108 is mounted to the outer case 70. This mounting of the respective EM controller 92 to the outer case 70 may be a direct mounting or an indirect mounting through an intermediate mounting structure.

Referring to FIG. 2, the aircraft electrical system 88 includes the electrical distribution bus 114. This aircraft electrical system 88 may also include a power source 118 and/or a power storage 120. The electrical distribution bus 114 is electrically coupled to each of the electric machines 90 through their respective EM controllers 92. The electrical distribution bus 114 is also electrically coupled to the power source 118 and the power storage 120, schematically shown via 118A and 120A. Of course, the electrical distribution bus 114 may also be electrically coupled to one or more additional electric components of the aircraft propulsion system 22 and/or one or more additional electric components of the aircraft outside of the aircraft propulsion system 22; e.g., airframe mounted electric components, etc. With this arrangement, the electrical distribution bus 114 provides an intermediate connection between the various electrical members (e.g., 92A, 92B, 118 and/or 120). The power source 118 may be an electric generator powered by the turbine engine 24 (see FIG. 1) or an electric generator powered by another aircraft powerplant; e.g., an engine of a companion aircraft propulsion system, an engine of an auxiliary power unit (APU), a fuel cell system, etc. The power storage 120 is configured to receive electricity from the electrical distribution bus 114 for storage. The power storage 120 is also configured to provide the stored electricity to the electrical distribution bus 114. The power storage 120, for example, may be configured as or otherwise include one or more electricity storage devices; e.g., batteries, super capacitors, etc. Of course, it is contemplated one or more of the electric machines 90 (e.g., operating as the electric generator(s)) may also or alternatively operate as a power source for another one or more of the electric machines 90 (e.g., operating as the electric motor(s)).

To accommodate the relatively high power requirements associated with the electric machines 90, each electric cable 112 may be sized with a relatively low gauge. Such low gauge electric cables 112 are relatively heavy and may require structural support for running relatively long cable lengths. The electric machine system 86 of FIG. 2 is therefore provided with a cable conduit 122 (schematically shown) for supporting, protecting and/or shielding the electric cables 112 as those electric cables 112 extend longitudinally between the electric machines 90 and the EM controllers 92.

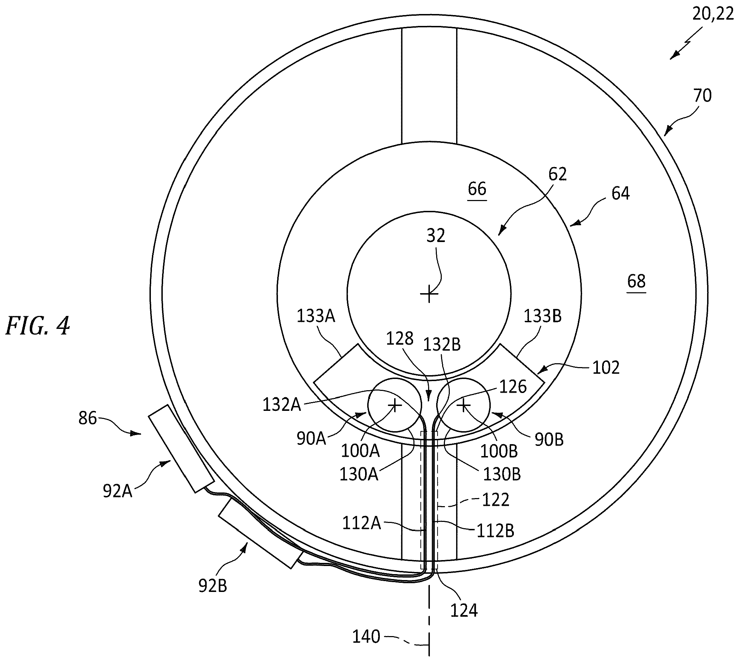

The cable conduit 122 extends longitudinally along a centerline of the cable conduit 122 from a first end 124 of the cable conduit 122 to a second end 126 of the cable conduit 122. The conduit first end 124 may be an outer and/or forward end of the cable conduit 122; see also FIG. 4. This conduit first end 124 may be disposed proximate to the EM controllers 92. The conduit second end 126 may be an inner and/or aft end of the cable conduit 122; see also FIG. 4. This conduit second end 126 may be disposed proximate to the electric machines 90. More particularly, referring to FIGS. 3 and 4, the conduit second end 126 may be disposed in, adjacent or otherwise near an air gap 128 laterally (e.g., circumferentially and/or tangentially) between and separating the first electric machine 90A and the second electric machine 90B. Briefly, the inter-machine gap 128 extends laterally between and is formed by a first side 130A of the first electric machine 90A and a second side 130B of the second electric machine 90B, where the first side 130A of the first electric machine 90A laterally faces (e.g., is opposite of) the second side 130B of the second electric machine 90B.

Referring to FIG. 2, at least an intermediate portion of each electric cable 112 extends longitudinally through the cable conduit 122 from the conduit first end 124 to the conduit second end 126. Referring to FIGS. 3 and 4, at the conduit second end 126, an end portion of each electric cable 112 projects longitudinally out from the cable conduit 122 into the inter-machine gap 128. Within the inter-machine gap 128, a longitudinal distal end of each electric cable 112 is electrically coupled to the respective electric machine 90 through an electric machine terminal 132A, 132B (generally referred to as "132"). Referring to FIG. 3, each machine terminal 132 electrically couples the respective electric cable to the respective machine stator 96; e.g., to a respective set of one or more coils on the machine stator 96. The first machine terminals 132A are disposed at the first side 130A of the first electric machine 90A. The second machine terminals 132B are disposed at the second side 130B of the second electric machine 90B. With this arrangement, the electric cables 112 may be routed to the electric machines 90 together (e.g., as a harness of cables) through a common cable conduit 122. The end portions of the electric cables 112 may then branch off for coupling to the electric machines 90 in a common location - in the inter-machine gap 128. This arrangement may reduce space for housing the electric machines 90 within the inner housing compartment 66 (see also FIG. 1). In addition, by locating the machine terminals 132A, 132B for both the first and the second electric machines 90A and 90B in a common location - in the inter-machine gap 128 - a technician may readily inspect and/or service one or both of the electric machines 90 without, for example, removing or relocating multiple sets of other aircraft components.

The gearbox 102 of FIGS. 3 and 4 extends circumferentially about the powerplant axis 32 between opposing circumferential ends 133A and 133B of the gearbox 102. The gearbox 102 of FIG. 3 extends axially along the powerplant axis 32 between opposing axial sides 135A and 135B of the gearbox 102. Each of the electric machines 90 of FIG. 3 is disposed to the same first side 135A of the gearbox 102, which gearbox first side 135A may be an axial forward side of the gearbox 102 or an axial aft side of the gearbox 102. Each electric machine 90 and its machine housing 98 is also mounted to the gearbox 102 at the same first side 135A of the gearbox 102. At the gearbox first side 135A, each electric machine 90 projects axially along its respective machine axis 100 and/or along the powerplant axis 32 away from the gearbox 102 to an axial distal end 137 of the respective electric machine 90 and its machine housing 98. Here, the first machine axis 100A of FIG. 3 is arranged parallel with, and is laterally offset from, the second machine axis 100B. The first machine axis 100A and the second machine axis 100B of FIG. 3 are also arranged parallel with, and are radially offset from, the powerplant axis 32. The present disclosure, however, is not limited to such an exemplary arrangement. For example, in other embodiments, it is contemplated the first machine axis 100A may be angularly offset from the second machine axis 100B.

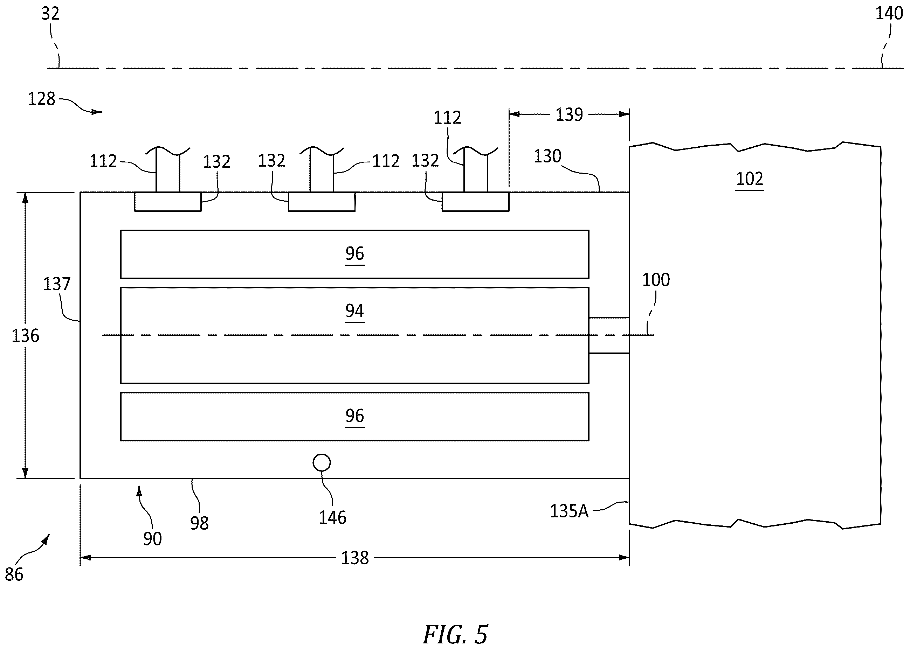

Referring to FIG. 5, the machine terminals 132 may be arranged axially along the respective electric machine side 130 in a respective terminal array; e.g., a linear array. Within this terminal array, the machine terminals 132 may (or may not) be axially equispaced along the machine housing 98 and its electric machine side 130. One or more of the machine terminals 132 may be positioned axially closer to the respective machine distal end 137 than the gearbox 102. At least one of the machine terminals 132 may be positioned axially closer to the gearbox 102 than the respective machine distal end 137. Each machine terminal 132 of FIG. 5, however, is disposed at least an axial distance 139 from the gearbox first side 135A, which terminal distance 139 may be equal to or greater than ten percent (10%) or twenty percent (20%) of an axial distance from the gearbox first side 135A to the respective machine distal end 137; e.g., an axial length 138 of the respective electric machine 90. By providing such a minimum distance between a respective machine terminal 132 and the gearbox 102, a technician may have enough working room for coupling and uncoupling the respective electric cable from that machine terminal 132.

Referring to FIGS. 3 and 4, each first machine terminal 132A may be (e.g., axially and/or radially) aligned with a respective second machine terminal 132B within the inter-machine gap 128. However, referring to FIG. 3, each first machine terminal 132A may also be (e.g., axially) offset from one or more others of the second machine terminals 132B.

The inter-machine gap 128 has a lateral width 134 between the first side 130A of the first electric machine 90A and the second side 130B of the second electric machine 90B. This gap width 134 may be sized equal to or less than a lateral width 136 of each electric machine 90 and/or the axial length 138 of each electric machine 90.

In some embodiments, referring to FIGS. 3 and 4, the inter-machine gap 128 may be circumferentially aligned with an engine bottom dead center (BDC) line 140. A lateral center of the inter-machine gap 128 of FIGS. 3 and 4, for example, is aligned with the bottom dead center line 140. In other embodiments, the lateral center of the inter-machine gap 128 may be laterally offset from the bottom dead center line 140 towards the first electric machine 90A or towards the second electric machine 90B.

In some embodiments, referring to FIG. 3, the electric machines 90 may be the only external components mounted to and operatively coupled to the gearbox 102. However, in other embodiments, it is contemplated one or more additional engine accessories 142 may also be mounted to and operatively coupled to the gearbox 102 and, more particularly, to one or both of the engine rotating structures 54 (see FIGS. 1 and 2). Examples of such additional engine accessories 142 include, but are not limited to, pump(s) (e.g., lubricant pump(s), fuel pump(s), coolant pump(s), compressor(s), etc.), fluid treatment device(s) (e.g., de-oiler(s)), alternator(s), generator(s), etc.

In some embodiments, referring to FIG. 3, a grounding strap 144 may be provided to electrically ground each electric machine 90 to the gearbox 102.

In some embodiments, referring to FIG. 5, a fluid line 146 may be routed to and fluidly coupled with each electric machine 90. This fluid line 146 may deliver lubricant and/or coolant to the electric machine 90. The fluid line 146 of FIG. 5 is located remote from the electric cables 112 running to the electric machine 90 so as to separate a high voltage electrical system from fluids which may potentially be combustible.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An assembly for an aircraft powerplant (20), comprising:
a gearbox (102);
a first electric machine (90A) mounted to the gearbox (102) at a first side (135A) of the gearbox (102), the first electric machine (90A) including a first machine rotor (94A), a first machine stator (96A) and a first machine terminal (132A), the first machine rotor (94A) rotatable about a first machine axis (100A), the first machine stator (96A) next to the first machine rotor (94A), and the first machine terminal (132A) disposed at a first side (130A) of the first electric machine (90A);
a first electric cable (112A) electrically coupled to the first machine stator (96A) through the first machine terminal (132A);
a second electric machine (90B) mounted to the gearbox (102) at the first side (135A) of the gearbox (102), the second electric machine (90B) including a second machine rotor (94B), a second machine stator (96B) and a second machine terminal (132B), the second machine rotor (94B) rotatable about a second machine axis (100B), the second machine stator (96B) next to the second machine rotor (94B), and the second machine terminal (132B) disposed at a second side (130B) of the second electric machine (90B) that faces the first side (130A) of the first electric machine (90A); and
a second electric cable (112B) electrically coupled to the second machine stator (96B) through the second machine terminal (132B).

2. The assembly of claim 1, wherein the second machine axis (100B) is parallel with the first machine axis (100A).

3. The assembly of claim 1 or 2, wherein the second machine terminal (132B) is:
axially aligned with the first machine terminal (132A) along at least one of the first machine axis (100A) or the second machine axis (100B); or
axially offset from the first machine terminal (132A) along at least one of the first machine axis (100A) or the second machine axis (100B).

4. The assembly of any preceding claim, further comprising:
a conduit (122);
the first electric cable (112A) extending longitudinally through the conduit (122) with a portion of the first electric cable (112A) projecting longitudinally out from an end (126) of the conduit (122) to the first machine terminal (132A); and
the second electric cable (112B) extending longitudinally through the conduit (122) with a portion of the second electric cable (112B) projecting longitudinally out from the end (126) of the conduit (122) to the second machine terminal (132B).

5. The assembly of any preceding claim, wherein:
a gap (128) extends laterally between and is formed by the first side (130A) of the first electric machine (90A) and the second side (130B) of the second electric machine (90B);
the first electric cable (112A) projects longitudinally into the gap (128) to the first machine terminal (132A); and
the second electric cable (112B) projects longitudinally into the gap (128) to the second machine terminal (132B).

6. The assembly of claim 5, wherein a lateral width (134) of the gap (128) is equal to or less than:
a lateral width (136) of the first electric machine (90A); and/or
a lateral width (136) of the second electric machine

7. The assembly of claim 5 or 6, wherein a lateral width (134) of the gap (128) is equal to or less than:
an axial length (138) of the first electric machine (90A); and/or
an axial length (138) of the second electric machine (90B).

8. The assembly of any preceding claim, wherein:
the first electric machine (90A) projects axially away from the first side (135A) of the gearbox (102) to an axial distal end (137) of the first electric machine (90A), and the first machine terminal (132A) is positioned axially closer to the axial distal end (137) of the first electric machine (90A) along the first machine axis (100A) than the gearbox (102); and/or
the second electric machine (90B) projects axially away from the first side (135A) of the gearbox (102) to an axial distal end (137) of the second electric machine (90B), and the second machine terminal (132B) is positioned axially closer to the axial distal end (137) of the second electric machine (90B) along the second machine axis (100B) than the gearbox (102).

9. The assembly of any of claims 1 to 7, wherein:
the first electric machine projects (90A) axially away from the first side (135A) of the gearbox (102) to an axial distal end (137) of the first electric machine (90A), and the first machine terminal (132A) is positioned axially closer to the gearbox (102) along the first machine axis (100A) than the axial distal end (137) of the first electric machine (90A); and/or
the second electric machine (90B) projects axially away from the first side (135A) of the gearbox (102) to an axial distal end (137) of the second electric machine (90B), and the second machine terminal (132B) is positioned axially closer to the gearbox (102) along the second machine axis (100B) than the axial distal end (137) of the second electric machine (90B).

10. The assembly of any of claims 1 to 7, wherein:
the first electric machine (90A) projects axially away from the first side (135A) of the gearbox (102) to an axial distal end (137) of the first electric machine (90A), the axial distal end (137) of the first electric machine (90A) is disposed a first axial distance (139) from the gearbox (102), and the first machine terminal (132A) is disposed a second axial distance (139) from the gearbox (102) that is equal to or greater than ten percent of the first axial distance (139); and/or
the second electric machine (90B) projects axially away from the first side (135A) of the gearbox (102) to an axial distal end (137) of the second electric machine (90B), the axial distal end (137) of the second electric machine (90B) is disposed a third axial distance (139) from the gearbox (102), and the second machine terminal (132B) is disposed a fourth axial distance (139) from the gearbox (102) that is equal to or greater than ten percent of the third axial distance.

11. The assembly of any preceding claim, wherein:
the first machine terminal (132A) is one of a plurality of first machine terminals (132A) disposed at and arranged axially along the first side (130A) of the first electric machine (90A), the first electric cable (112A) is one of a plurality of first electric cables (112A), and each of the plurality of first electric cables (112A) is electrically coupled to the first machine stator (96A) through a respective one of the plurality of the first machine terminals (132A); and/or
the second machine terminal (132B) is one of a plurality of second machine terminals (132B) disposed at and arranged axially along the second side (130B) of the second electric machine (90B), the second electric cable (112B) is one of a plurality of second electric cables (112B), and each of the plurality of second electric cables (112B) is electrically coupled to the second machine stator (96B) through a respective one of the plurality of the second machine terminals (132B).

12. The assembly of any preceding claim, further comprising:
an engine case (28) extending axially along and circumferentially about a centerline axis (32);
the gearbox (102) disposed radially outboard of and mounted with the engine case (28), and the gearbox (102) extending axially along the centerline axis (32) to the first side (135A) of the gearbox (102),
optionally, wherein the first machine axis (100A) and the second machine axis (100B) are parallel to the centerline axis (32).

13. The assembly of any preceding claim, further comprising:
a compressor section (39), a combustor section (40), a turbine section (41) and a flowpath (78) extending through the compressor section (39), the combustor section (40) and the turbine section (41) from an inlet (80) into the flowpath (78) to an exhaust (82) from the flowpath (78); and
a first engine rotating structure (54A) comprising a first turbine rotor (49) disposed in the turbine section (41), the first engine rotating structure (54A) operatively coupled to the first machine rotor (94A) through the gearbox (102),
optionally, wherein a second engine rotating structure (54B) comprising a second turbine rotor (50) disposed in the turbine section (41), the second engine rotating structure (54B) operatively coupled to the second machine rotor (94B) through the gearbox (102), and the second engine rotating structure (54B) rotationally independent of the first engine rotating structure (54A).

14. The assembly of any preceding claim, further comprising:
a first electric machine controller (92A) electrically coupled to the first electric machine (90A) through the first electric cable (112A); and
a second electric machine controller (92B) electrically coupled to the second electric machine (90B) through the second electric cable (112B).

15. The assembly of claim 14, further comprising:
a fan case (70); and
a core case (62) radially inboard of the fan case (70), wherein:
the gearbox (102) is mounted with the core case (62); and
the first electric machine controller (92A) and the second electric machine controller (92B) are each mounted with the fan case (70).
